# EUROPÄISCHE PATENTSCHRIFT

(11) **EP 3 228 524 B1**
(45) Veröffentlichungstag und Bekanntmachung des Hinweises auf die Patenterteilung: **18.09.2019**
(21) Anmeldenummer: 17000532.6
(22) Anmeldetag: 31.03.2017
(51) Int. Cl.: B62D 6/04, B62D 15/02

(54) **FAHRZEUG, INSBESONDERE NUTZFAHRZEUG, SOWIE VERFAHREN ZUR SPURHALTUNG**
VEHICLE, IN PARTICULAR COMMERCIAL VEHICLE, AND METHOD FOR HOLDING THE TRACK
VÉHICULE, EN PARTICULIER VÉHICULE UTILITAIRE ET PROCÉDÉ DE SUIVI

(30) Priorität: 08.04.2016 DE 102016004234
(43) Veröffentlichungstag der Anmeldung: 11.10.2017
(73) Patentinhaber: MAN Truck & Bus SE, 80995 München (DE)
(72) Erfinder: Fritz, Maria, 80637 München (DE)
(74) Vertreter: Liebl, Thomas

(56) Entgegenhaltungen:
- DE-C1- 19 821 618
- US-A1- 2010 087 988
- US-A1- 2015 025 745

## Beschreibung

Die Erfindung betrifft ein Fahrzeug, insbesondere ein Nutzfahrzeug, nach dem Oberbegriff des Anspruchs 1 sowie ein Verfahren, insbesondere zur Spurhaltung, nach dem Oberbegriff des Anspruchs 9. Ein solches Fahrzeug ist aus der Druckschrift US 2015/025745 A1 vorbekannt, die als nächstliegender Stand der Technik anerkannt wird.

Auf Straßen weist eine Fahrbahn meist eine Querneigung, das heißt quer zur Fahrtrichtung auf, insbesondere um Regenwasser von der Fahrbahn effektiv zur Seite hin abzuleiten. Solche Querneigungen der Fahrbahn müssen von einem Fahrer eines Fahrzeugs in seinem Lenkverhalten berücksichtigt werden. Insbesondere bei Nutzfahrzeugen und dabei besonders bei Lastkraftwagen mit hohem Gewicht muss eine Fahrbahn-Querneigung zur Einhaltung der Fahrspur durch konstantes Gegenlenken ausgeglichen werden. An bestimmten Fahrbahnpositionen erfolgt, beispielsweise bedingt durch landschaftliche Gegebenheiten, ein Querneigungswechsel, indem sich die Querneigung zum Beispiel von nach rechts abfallend auf nach links abfallend oder umgekehrt ändert. Ein solcher Querneigungswechsel der Fahrbahn erfordert von einem Fahrer eine aktive Änderung des Lenkwinkels, damit das Fahrzeug mit seiner Fahrspur nicht von der Fahrbahn abkommt. Solche Querneigungswechsel der Fahrbahn erfordern eine hohe Aufmerksamkeit und ein gutes Reaktionsvermögen eines Fahrers, zumal solche Fahrbahnquerneigungswechsel für einen Fahrer meist weder vorhersehbar noch deutlich sichtbar sind. An Fahrbahnpositionen mit Querneigungswechseln, insbesondere auf Autobahnen besteht daher eine erhöhte Unfallgefahr, besonders bei abnehmender Konzentration eines Fahrers nach langen Fahrzeiten.

Aufgabe der Erfindung ist es, ein Fahrzeug, insbesondere ein Nutzfahrzeug, so auszurüsten, dass eine mögliche Unfallgefahr durch Querneigungswechsel einer Fahrbahn verringert wird. Weiterhin ist es Aufgabe der Erfindung, ein hierfür geeignetes Verfahren zur Verfügung zu stellen.

Diese Aufgabe wird gelöst mit den Merkmalen der unabhängigen Ansprüche. Vorteilhafte Ausgestaltungen sind Gegenstand der Unteransprüche.

Gemäß Anspruch 1 ist ein Fahrzeug, insbesondere Nutzfahrzeug, mit einer insbesondere fahrerbetätigbaren Lenkvorrichtung, vorzugsweise mit einem Lenkrad, vorgesehen, wobei die Lenkvorrichtung von einem Fahrer während eines Fahrbetriebs wenigstens zur Einhaltung einer Fahrspur auf einer Fahrbahn mit einer Querneigung betätigbar ist. Erfindungsgemäß ist vorgesehen, dass das Fahrzeug wenigstens eine Vorrichtung zur Erkennung eines Querneigungswechsels der Fahrbahn während des Fahrbetriebs aufweist, die bei einem erkannten Querneigungswechsel ein zugeordnetes Neigungswechselsignal abgibt.

Zudem ist im Fahrzeug wenigstens eine Fahrer-Warneinrichtung vorgesehen, die mit einem Neigungswechselsignal aktivierbar ist. Damit kann ein Fahrer vorteilhaft auf einen Querneigungswechsel der Fahrbahn aufmerksam gemacht werden und zur Vermeidung einer Gefahrensituation darauf mit einer Lenkwinkelkorrektur reagieren. Alternativ oder zusätzlich dazu kann das Fahrzeug ein Lenk-Assistenzsystem für Lenkwinkelkorrekturen aufweisen, das mit einem Neigungswechselsignal für eine durch einen Querneigungswechsel erforderliche Lenkwinkelkorrektur aktivierbar ist. Je nach Auslegung eines solchen, gegebenenfalls ohnehin für andere Funktionen im Fahrzeug enthaltenen Lenk-Assistenzsystems kann eine selbsttätig ausgeführte Lenkwinkelkorrektur eine vom Fahrer durchzuführende Lenkwinkelkorrektur lediglich unterstützen oder die erforderliche Lenkwinkelkorrektur insgesamt automatisch durchführen.

Eine Vorrichtung zur Erkennung eines Querneigungswechsels der Fahrbahn kann auf unterschiedliche Weise ausgeführt sein:
In einer ersten Ausführungsform weist eine solche Erkennungsvorrichtung für einen in Fahrtrichtung vorausliegenden Querneigungswechsel eine fahrzeugfeste Bilderfassungseinrichtung (nachstehend stets Kamera genannt) mit einer nachgeschalteten Kameradatenauswertung mit optischen Erkennungsalgorithmen für einen Querneigungswechsel auf. Wird ein solcher Querneigungswechsel im Fahrbetrieb im vorausschauenden Nahbereich erkannt, wird vor dessen Erreichen ein Neigungswechselsignal als Steuersignal erzeugt.

Als alternative oder zusätzliche zweite Ausführungsform einer Vorrichtung zur Erkennung eines in Fahrtrichtung vorausliegenden Querneigungswechsels wird eine Einheit, vorzugsweise eine Navigations-Einheit, zur Feststellung der aktuellen Fahrzeugposition in Verbindung mit einem digitalen Kartenmaterial vorgeschlagen, wobei zudem im Kartenmaterial zusätzlich zu den Fahrbahninformationen Daten für Positionen mit Querneigungswechseln hinterlegt sind. Im Fahrbetrieb wird dann im Nahbereich vor Erreichen einer solchen Position mit einem Querneigungswechsel ein Neigungswechselsignal zur Fahrerwarnung und/oder gegebenenfalls für einen Lenkkorrektureingriff erzeugt.

Als alternative oder zusätzliche weitere Ausführungsform einer Vorrichtung zur Erkennung eines in Fahrtrichtung vorausliegenden Querneigungswechsels kann auch eine entsprechende Information von einem vorausfahrenden Fahrzeug genutzt werden, indem ein dort bereits erkannter Querneigungswechsel mit einem Neigungswechselsignal an ein nachfolgendes Fahrzeug gesendet und dort in einer Fahrzeug-zu-Fahrzeug-Kommunikation weiterverwertet wird.

Mit den drei vorstehenden Ausführungsformen zur Erkennung eines Querneigungswechsels wird ein solcher vorausschauend erkannt werden. In einer weiteren zusätzlichen Ausführungsform einer Vorrichtung zur Erkennung eines Querneigungswechsels können ein oder mehrere Neigungssensoren einer Fahrzeugsensorik verwendet und dessen bzw. deren Sensorsignale hinsichtlich eines Querneigungswechsels ausgewertet werden. Ein Querneigungswechsel wird hiermit aber nicht vorausschauend, sondern aktuell beim Überfahren erkannt, so dass ein entsprechendes zugeordnetes Neigungswechselsignal erst zeitgleich erzeugt werden kann. Da sich das Abkommen von der Fahrbahn bei einer fehlenden oder verspäteten Lenkwinkelkorrektur durch den Fahrer jedoch über mehrere Sekunden hinweg ereignet, ist hier eine zeitgleiche Warnung des Fahrers beim Überfahren eines Querneigungswechsels für eine relativ späte Lenkwinkelkorrektur zur Vermeidung einer Gefahrensituation regelmäßig noch rechtzeitig. Für eine automatische Lenkwinkelkorrektur durch ein Lenk-Assistenzsystem ist dessen Lenkeingriff beim Überfahren des Querneigungswechsels ohnehin noch rechtzeitig genug.

Die Fahrer-Warneinrichtung ist vorzugsweise mit einem Neigungswechselsignal zu einem optischen und/oder akustischen und/oder haptischen Warnsignal aktivierbar. Dazu können insbesondere ohnehin im Fahrzeug vorhandene Warneinrichtungen mitverwendet werden mit einem deutlichen Hinweis auf eine Warnung vor einem Querneigungswechsel der Fahrbahn. Als haptisches Warnsignal kann beispielsweise ein Moment auf ein Lenkrad gegeben werden, so dass insbesondere eine Warnung durch eine Lenkrad-Vibration erfolgt.

Zudem kann dem Fahrer vorzugsweise ein Hinweis auf einen Querneigungswechsel ohne optische und/oder akustische Beeinflussung oder gegebenenfalls zusätzlich dadurch gegeben werden, dass im Fahrersitz wenigstens ein, vorzugsweise mehrere, aufblasbare Luftpolster enthalten sind, mit dem bzw. denen die Querneigung der Sitzfläche veränderbar ist. Bei einem bevorstehenden oder aktuellen Querneigungswechsel der Fahrbahn können dann das oder die Luftpolster mit einem Neigungswechselsignal so aktiviert werden, dass der Fahrer mit einer entsprechenden Veränderung der Sitzflächenneigung auf den Querneigungswechsel haptisch hingewiesen wird.

In einer Weiterbildung der Vorrichtung zur Erkennung eines Querneigungswechsels der Fahrbahn ist die Größe des Querneigungswechsels entsprechend der jeweiligen Größe der Änderung des Querneigungswinkels messtechnisch durch Auswertung von Kameradaten und/oder durch Auswertung von Querneigungssensordaten und/oder aus abgelegten Daten in einem digitalen Kartenmaterial bestimmbar. Mit einem entsprechend variierbar erzeugten Neigungswechselsignal kann dann die Intensität von wenigstens einem Warnsignal und/oder die Befüllung von wenigstens einem aufblasbaren Luftpolster und/oder die Größe selbsttätiger Lenkeingriffe für Lenkwinkelkorrekturen entsprechend der jeweiligen Größe des Querneigungswechsels variiert und angepasst werden. Insbesondere kann auch ein Schwellwert vorgegeben werden für eine definierte bzw. vorzugsweise sehr geringe Größe eines Querneigungswechsels mit einer nahezu unmerklichen Auswirkung auf das Lenkverhalten des Fahrzeugs. Unter einem solchen Schwellwert können Warnsignale und/oder Luftpolsterbefüllungen und/oder selbsttätige Lenkeinrichtung unterbleiben und unterdrückt werden. Andererseits wird ein Fahrer bei großen Querneigungswechseln sehr intensiv auf solche aufmerksam gemacht bzw. erfolgt dann eine entsprechend angepasste große Lenkwinkelkorrektur.

Weiter wird ein Verfahren für ein Fahrzeug beansprucht, mit dem bei einem Querneigungswechsel der Fahrbahn eine Fahrer-Warneinrichtung aktiviert und/oder eine Lenkwinkelkorrektur selbsttätig durchgeführt wird.

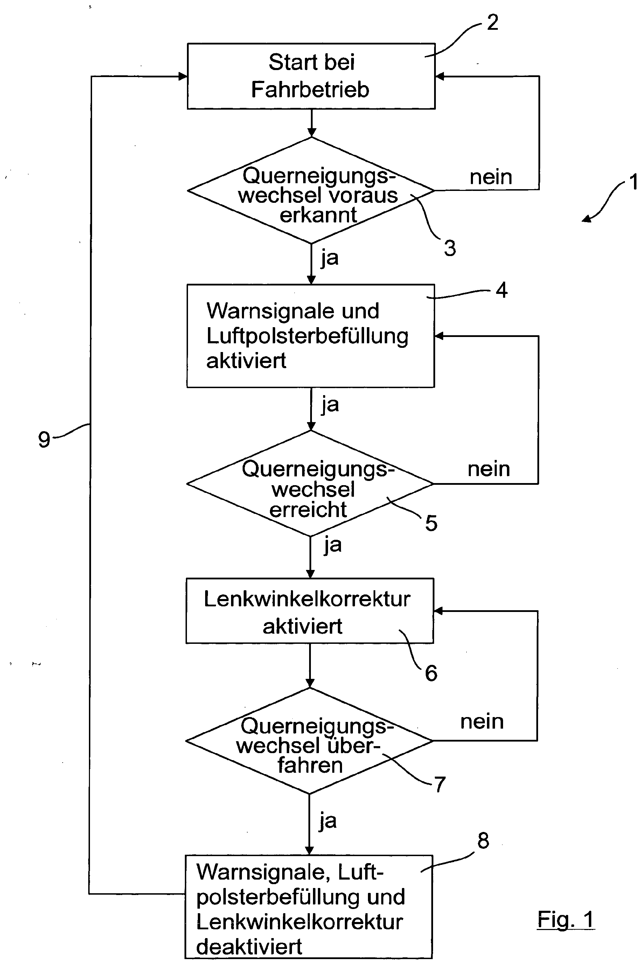

Anhand eines Flussschemas nach Fig. 1 wird beispielhaft ein solcher Verfahrensablauf erläutert:
Im Flussdiagram 1 wird im Ausführungs-Rechteck 2 der Verfahrensablauf beim Fahrbetrieb des Fahrzeugs selbsttätig oder von Hand durch den Fahrer gestartet. In der Entscheidungs-Raute 3 wird dann festgestellt, ob mittels wenigstens einer der vorstehend beschriebenen Vorrichtungen ein in Fahrtrichtung vorausliegender Querneigungswechsel erkannt wird.

In diesem Fall werden entsprechend dem Ausführung-Rechteck 4 optische und/oder akustische und/oder haptische Warnsignale und/oder eine Luftpolsterbefüllung im Fahrzeugsitz aktiviert, um einen Fahrer auf den voraus festgestellten Querneigungswechsel aufmerksam zu machen.

Wird entsprechend der Entscheidungs-Raute 5 festgestellt, dass der Ort des Querneigungswechsels erreicht ist, wird hier beispielhaft zusätzlich zu der aktivierten Warnfunktion gemäß Ausführungs-Rechteck 6 eine Lenkwinkelkorrektur mittels eines Lenk-Assistenzsystems zum Ausgleich und zur Beherrschung des Querneigungswechsels aktiviert. Wird dann gemäß Entscheidungs-Raute 7 festgestellt, dass die Position des Querneigungswechsels überfahren ist, werden gemäß Ausführungs-Rechteck 8 die Warnsignale sowie gegebenenfalls eine Luftposterbefüllung und die Lenkwinkelkorrektur wieder deaktiviert und der Prozess wird gemäß Linie 9 wieder zurückgesetzt bis zum erneuten Erreichen einer Fahrposition mit einem Querneigungswechsel.

Das Flussdiagramm 1 gibt lediglich beispielhaft einen Verfahrensablauf wieder und kann je nach den Gegebenheiten und der Ausrüstung des Fahrzeugs vereinfacht oder insbesondere durch Einbeziehung konkreter Größen eines Querneigungswechsels funktionell erweitert werden.

### Bezugszeichenliste

- 1: Flussdiagramm
- 2: Ausführungs-Rechteck
- 3: Entscheidungs-Raute
- 4: Ausführungs-Rechteck
- 5: Entscheidungs-Raute
- 6: Ausführungs-Rechteck
- 7: Entscheidungs-Raute
- 8: Ausführungs-Rechteck
- 9: Linie

## Patentansprüche

1. Fahrzeug, insbesondere Nutzfahrzeug, mit einer Lenkvorrichtung, vorzugsweise mit einem Lenkrad, wobei die Lenkvorrichtung von einem Fahrer während eines Fahrbetriebs wenigstens zur Einhaltung einer Fahrspur auf einer Fahrbahn mit einer Querneigung betätigbar ist,
wobei das Fahrzeug wenigstens eine Vorrichtung (3) zur Erkennung eines in Fahrtrichtung vorausliegenden Querneigungswechsels der Fahrbahn während des Fahrbetriebs aufweist, die bei einem erkannten Querneigungswechsel ein zugeordnetes Neigungswechselsignal abgibt, und
wobei das Fahrzeug wenigstens eine Fahrer-Warneinrichtung (4) aufweist, die mit einem Neigungswechselsignal aktivierbar ist, und/oder wobei das Fahrzeug ein Lenk-Assistenzsystem für Lenkwinkelkorrekturen (6) aufweist, das mit einem Neigungswechselsignal für eine durch einen Querneigungswechsel erforderliche Lenkwinkelkorrektur aktivierbar ist.

2. Fahrzeug nach Anspruch 1, **dadurch gekennzeichnet, dass** die Vorrichtung zur Erkennung des in Fahrtrichtung vorausliegenden Querneigungswechsels (3) eine fahrzeugfeste Kamera mit einer nachgeschalteten Kameradatenauswertung mit optischen Erkennungsalgorithmen für einen Querneigungswechsel aufweist und im Fahrbetrieb im Nahbereich vor Erreichen eines erkannten Querneigungswechsels ein Neigungswechselsignal erzeugt wird.

3. Fahrzeug nach Anspruch 1 oder Anspruch 2, **dadurch gekennzeichnet, dass** die Vorrichtung zur Erkennung des in Fahrtrichtung vorausliegenden Querneigungswechsels (3) eine Einheit, vorzugsweise eine Navigations-Einheit, zur Feststellung der aktuellen Fahrzeugposition in Verbindung mit einem digitalen Kartenmaterial aufweist, wobei im Kartenmaterial zusätzlich zu den Fahrbahninformationen Daten für Positionen mit Querneigungswechseln hinterlegt sind und im Fahrbetrieb im Nahbereich vor Erreichen einer solchen Position ein Neigungswechselsignal erzeugt wird.

4. Fahrzeug nach einem der vorhergehenden Ansprüche, **dadurch gekennzeichnet, dass** die Vorrichtung zur Erkennung des in Fahrtrichtung vorausliegenden Querneigungswechsels (3) eine Kommunikations-Einheit für eine Fahrzeug-zu-Fahrzeug-Kommunikation aufweist, mit der ein von einem vorausfahrenden Fahrzeug erzeugtes und gesendetes Neigungswechselsignal für eine aktuelle Weiterverarbeitung empfangen werden kann.

5. Fahrzeug nach einem der vorhergehenden Ansprüche, **dadurch gekennzeichnet, dass** zusätzlich eine Vorrichtung zur Erkennung eines aktuellen Querneigungswechsels vorgesehen ist, die wenigstens einen Neigungssensor, vorzugsweise mehrere Neigungssensoren, einer Fahrzeugsensorik aufweist, dessen Sensorsignale in einer Auswerteeinheit zur Erkennung eines Querneigungswechsels auswertbar sind, insbesondere dergestalt auswertbar sind, dass bei einem erkannten Querneigungswechsel ein Neigungswechselsignal erzeugbar ist.

6. Fahrzeug nach einem der vorhergehenden Ansprüche, **dadurch gekennzeichnet, dass** die Fahrer-Warneinrichtung (4) mit einem Neigungswechselsignal zu einem optischen und/oder akustischen und/oder haptischen Warnsignal aktivierbar ist, wobei bevorzugt vorgesehen ist, dass ein haptisches Warnsignal mittels einer Lenkradbewegung, insbesondere mittels einer Lenkrad-Vibration, generierbar ist.

7. Fahrzeug nach einem der vorhergehenden Ansprüche, **dadurch gekennzeichnet,**
**dass** das Fahrzeug im Fahrersitz wenigstens ein, vorzugsweise mehrere, aufblasbare Luftpolster aufweist, mit dem die Querneigung der Sitzfläche veränderbar ist, und
**dass** das wenigstens eine Luftpolster mit einem Neigungswechselsignal entsprechend der Richtung des bevorstehenden oder eines aktuellen Querneigungswechsels der Fahrbahn aktivierbar ist, insbesondere zur Verstärkung der haptischen Wahrnehmung eines Querneigungswechsels durch den Fahrer.

8. Fahrzeug nach einem der vorhergehenden Ansprüche, **dadurch gekennzeichnet,**
**dass** die Größe des Querneigungswechsels entsprechend der jeweiligen Größe der Änderung des Querneigungswinkels messtechnisch durch Auswertung von Kameradaten und/oder durch Auswertung von Querneigungssensordaten und/oder aus abgelegten Daten in einem digitalen Kartenmaterial bestimmbar ist, und
**dass** die Intensität von wenigstens einem Warnsignal und/oder die Befüllung von wenigstens einem aufblasbaren Luftpolster und/oder die Größe selbsttätiger Lenkeingriffe für Lenkwinkel-Korrekturen entsprechend der jeweiligen Größe des Querneigungswechsels variierbar und anpassbar sind.

9. Verfahren, insbesondere zur Spurhaltung für ein Fahrzeug und/oder insbesondere für ein Fahrzeug nach einem der vorstehenden Ansprüche, mit einer Lenkvorrichtung, die von einem Fahrer während eines Fahrbetriebs zur Einhaltung einer Fahrspur auf einer Fahrbahn mit einer Querneigung betätigbar ist, wobei mittels einer Vorrichtung ein in Fahrtrichtung vorausliegender Querneigungswechsel der Fahrbahn erkannt und ein zugeordnetes Neigungswechselsignal abgegeben wird (3), und
wobei mit einem Neigungswechselsignal eine Fahrer-Warneinrichtung aktiviert wird (4) und/oder wobei mit einem Neigungswechselsignal eine durch den Querneigungswechsel erforderliche Lenkwinkelkorrektur (6) selbsttätig unterstützt oder insgesamt durchgeführt wird.

## Claims

1. Vehicle, in particular utility vehicle, having a steering device, preferably having a steering wheel, wherein the steering device can be activated by a driver during a driving operation, at least in order to keep to a lane on a carriageway with a lateral inclination,
wherein the vehicle has at lest one device (3) for detecting a change of the lateral inclination of the carriageway lying ahead in the direction of travel during the driving operation, which device outputs an assigned inclination change signal when a change in lateral inclination is detected, and
wherein the vehicle has at lest one driver warning apparatus (4) which can be activated with an inclination change signal, and/or wherein the vehicle has a steering assistance system for steering angle corrections (6), which system can be activated with an inclination change signal for a steering angle correction which is required owing to a lateral inclination change.

2. Vehicle according to Claim 1, **characterized in that** the device for detecting the lateral inclination change (3) lying ahead in the direction of travel has a vehicle-fixed camera with a camera data evaluation means which is connected downstream and has optical detection algorithms for a lateral inclination change, and in the driving operation an inclination change signal is generated in the close range before a detected lateral inclination change is reached.

3. Vehicle according to Claim 1 or Claim 2, **characterized in that** the device for detecting the lateral inclination change (3) lying ahead in the direction of travel has a unit, preferably a navigation unit, for detecting the current vehicle position in conjunction with digital map material, wherein data for positions with lateral inclination changes are stored in the map material in addition to the carriageway information, and an inclination change signal is generated in the driving operation, in the close range before such a position is reached.

4. Vehicle according to one of the preceding claims, **characterized in that** the device for detecting the lateral inclination change (3) lying ahead in the direction of travel has a communication unit for a vehicle-to-vehicle communication, with which unit an inclination change signal which is generated and transmitted by a vehicle travelling ahead can be received for current further processing.

5. Vehicle according to one of the preceding claims, **characterized in that** in addition a device for detecting a current lateral inclination change is provided, which device has at least one inclination sensor, preferably a plurality of inclination sensors, of a vehicle sensor system, the sensor signals of which can be evaluated in an evaluation unit for detecting a lateral inclination change, in particular can be evaluated in such a way that when a lateral inclination change is detected an inclination change signal can be generated.

6. Vehicle according to one of the preceding claims, **characterized in that** the driver warning apparatus (4) can be activated with an inclination change signal to form a visual and/or acoustic and/or haptic warning signal, wherein there is preferably provision that a haptic warning signal can be generated by means of a steering wheel movement, in particular by means of steering wheel vibration.

7. Vehicle according to one of the preceding claims, **characterized**
**in that** the vehicle has at least one inflatable air cushion, preferably a plurality of inflatable air cushions, in the vehicle seat, with which air cushions the lateral inclination of the sitting surface can be changed, and
**in that** the at least one air cushion can be activated with an inclination change signal in accordance with the direction of the imminent lateral inclination change, or of a current lateral inclination change, of the carriageways, in particular in order to boost the haptic perception of a lateral inclination change by the driver.

8. Vehicle according to one of the preceding claims, **characterized**
**in that** the magnitude of the lateral inclination change can be determined in accordance with the respective magnitude of the change in the lateral inclination angle by means of measuring equipment by evaluating camera data and/or by evaluating lateral inclination sensor data and/or from stored data in digital map material, and
**in that** the intensity of at least one warning signal and/or the inflation of at least one inflatable air cushion and/or the magnitude of independent steering interventions for steering angle corrections can be varied and adapted in accordance with the respective magnitude of the lateral inclination change.

9. Method, in particular for lane keeping for a vehicle and/or in particular for a vehicle according to one of the preceding claims, having a steering device which can be activated by a driver during a driving operation in order to keep to a lane on a carriageway with a lateral inclination, wherein by means of a device a lateral inclination change in the carriageway lying ahead in the direction of travel is detected and an assigned inclination change signal is output (3), and
wherein a driver warning apparatus is activated (4) with an inclination change signal, and/or wherein a steering angle correction (6) which is required as a result of the lateral inclination change is assisted, or carried out in its entirety, with a inclination change signal.

## Revendications

1. Véhicule, notamment véhicule utilitaire, comprenant un dispositif de direction, de préférence comprenant un volant de direction, le dispositif de direction pouvant être actionné par un conducteur pendant un régime de déplacement au moins pour respecter une voie de circulation sur une chaussée ayant une inclinaison transversale,
le véhicule possédant au moins un dispositif (3) de reconnaissance d'un changement d'inclinaison transversale de la chaussée se trouvant à l'avant dans le sens du déplacement pendant le régime de déplacement, lequel délivre un signal de changement d'inclinaison associé en présence d'un changement d'inclinaison transversale reconnu, et
le véhicule possédant au moins un appareil d'alerte de conducteur (4) qui peut être activé avec un signal de changement d'inclinaison et/ou le véhicule possédant un système d'assistance de direction pour des corrections de l'angle de braquage (6), lequel peut être activé avec un signal de changement d'inclinaison pour une correction de l'angle de braquage rendue nécessaire par un changement d'inclinaison transversale.

2. Véhicule selon la revendication 1, **caractérisé en ce que** le dispositif (3) de reconnaissance d'un changement d'inclinaison transversale se trouvant à l'avant dans le sens du déplacement possède une caméra montée à demeure sur le véhicule en aval de laquelle est connecté un interpréteur de données de caméra comprenant des algorithmes de reconnaissance optiques pour un changement d'inclinaison transversale et un signal de changement d'inclinaison est généré en régime de déplacement dans la zone de proximité avant d'atteindre un changement d'inclinaison transversale reconnu.

3. Véhicule selon la revendication 1 ou la revendication 2, **caractérisé en ce que** le dispositif de reconnaissance d'un changement d'inclinaison transversale (3) se trouvant à l'avant dans le sens du déplacement possède une unité, de préférence une unité de navigation, destinée à fixer la position actuelle du véhicule en liaison avec un matériel cartographique numérique, des données pour des positions avec changements d'inclinaison transversale étant stockées dans le matériel cartographique en plus des informations de chaussée et un signal de changement d'inclinaison étant généré en régime de déplacement dans la zone de proximité avant d'atteindre une telle position.

4. Véhicule selon l'une des revendications précédentes, **caractérisé en ce que** le dispositif de reconnaissance du changement d'inclinaison transversale (3) se trouvant à l'avant dans le sens du déplacement possède une unité de communication pour une communication de véhicule à véhicule, avec laquelle peut être reçu un signal de changement d'inclinaison généré et émis par un véhicule qui précède pour un traitement postérieur actuel.

5. Véhicule selon l'une des revendications précédentes, **caractérisé en ce qu'**un dispositif de reconnaissance d'un changement d'inclinaison transversale actuel est en plus présent, lequel possède au moins un capteur d'inclinaison, de préférence plusieurs capteurs d'inclinaison, d'un système de détection de véhicule dont les signaux de capteur peuvent être interprétés dans une unité d'interprétation en vue de reconnaître un changement d'inclinaison transversale, peuvent notamment être interprétés de telle sorte qu'un signal de changement d'inclinaison peut être généré dans le cas d'un changement d'inclinaison transversale reconnu.

6. Véhicule selon l'une des revendications précédentes, **caractérisé en ce que** l'appareil d'alerte de conducteur (4) peut être activé avec un signal de changement d'inclinaison en un signal d'alerte visuel et/ou sonore et/ou haptique, en prévoyant de préférence qu'un signal d'alerte haptique peut être généré au moyen d'un mouvement du volant de direction, notamment au moyen d'une vibration du volant de direction.

7. Véhicule selon l'une des revendications précédentes, **caractérisé en ce**
**que** le véhicule possède dans le siège du conducteur au moins un, de préférence plusieurs coussins pneumatiques gonflables avec lesquels l'inclinaison transversale de la surface du siège peut être modifiée et
**que** l'au moins un coussin pneumatique peut être activé avec un signal de changement d'inclinaison conformément à la direction du changement d'inclinaison transversale imminent ou actuel de la chaussée, notamment en vue de renforcer la perception haptique d'un changement d'inclinaison transversale par le conducteur.

8. Véhicule selon l'une des revendications précédentes, **caractérisé en ce**
**que** l'importance du changement d'inclinaison transversale peut être déterminée en fonction de l'importance respective de la modification de l'angle d'inclinaison transversale par métrologie en interprétant des données de caméra et/ou en interprétant des données de capteur d'inclinaison transversale et/ou à partir de données stockées dans un matériel cartographique numérique, et
**que** l'intensité d'au moins un signal d'alerte et/ou le remplissage d'au moins un coussin pneumatique gonflable et/ou l'amplitude des interventions automatiques dans la direction pour des corrections de l'angle de braquage sont variables et adaptables en fonction de l'importance respective du changement d'inclinaison transversale.

9. Procédé, notamment pour maintenir une voie pour un véhicule et/ou notamment pour un véhicule selon l'une des revendications précédentes, comprenant un dispositif de direction pouvant être actionné par un conducteur pendant un régime de déplacement en vue de respecter une voie de circulation sur une chaussée ayant une inclinaison transversale, un changement d'inclinaison transversale de la chaussée se trouvant à l'avant dans le sens du déplacement étant reconnu au moyen d'un dispositif et un signal de changement d'inclinaison associé étant délivré (3), et
un appareil d'alerte de conducteur étant activé (4) avec un signal de changement d'inclinaison et/ou une correction de l'angle de braquage (6) rendue nécessaire par le changement d'inclinaison transversale étant assistée automatiquement ou effectuée dans son ensemble par un signal de changement d'inclinaison.
